# EUROPÄISCHE PATENTSCHRIFT

(11) **EP 2 860 545 B1**
(45) Veröffentlichungstag und Bekanntmachung des Hinweises auf die Patenterteilung: **01.02.2017**
(21) Anmeldenummer: 13188288.8
(22) Anmeldetag: 11.10.2013
(51) Int. Cl.: G01S 5/02, H04W 4/02, H04W 4/20, H04W 4/00

(54) **Verfahren und System zum Bereitstellen einer Positionsinformation für eine bewegliche Kommunikationseinrichtung**
Method and system for providing positional information for a mobile communication device
Procédé et système de mise à disposition d'une information de position pour un dispositif de communication mobile

(43) Veröffentlichungstag der Anmeldung: 15.04.2015
(73) Patentinhaber: Deutsche Telekom AG, 53113 Bonn (DE)
(72) Erfinder: Dr. Witych, Michael, 53227 Bonn (DE); Welzel, Thomas, 53604 Bad Honnef (DE); Müller, Dietmar, 53227 Bonn (DE)
(74) Vertreter: Blumbach Zinngrebe

(56) Entgegenhaltungen:
- US-A1- 2011 199 917
- US-B2- 8 121 621

## Beschreibung

Die Erfindung betrifft ein Verfahren sowie ein System zum Bereitstellen einer Positionsinformation für eine bewegliche Kommunikationseinrichtung, die sich einer stationären Kommunikationseinrichtung nähert.

Mobile Kommunikationseinrichtungen wie z. B. Mobiltelefone oder Smartphones werden immer leistungsfähiger und komplexer. Smartphones verfügen in der Regel über einen GPS-Empfänger, um zum Beispiel die eigene Position mit einer durch den GPS-Empfänger vorgegebenen Genauigkeit bestimmen zu können, wobei die GPS-Positionsgenauigkeit und GPS-Verfügbarkeit für viele Anwendungen oft nicht ausreichend ist.

Bekannt ist auch, dass Smartphones Positionsinformationen von WLAN-Zugangspunkten und Mobilfunkmasten empfangen können, um ihre eigene Position grob zu bestimmen oder z. B. die eigene GPS-Positionsgenauigkeit zu verbessern oder deren Verfügbarkeitslücken zu schließen.

Solche Maßnahmen zur Positionsbestimmung erfordern jedoch, dass das Smartphone selbst Berechnungen durchführen muss, was Prozessorleistung verlangt und somit Energie verbraucht. Werden die Berechnungen von unterschiedlichen Softwareversionen durchgeführt, so kann dies auch zu unterschiedlichen Ergebnissen führen, insbesondere bei Vorliegen von Fehlern in der Berechnungssoftware der beweglichen Kommunikationseinrichtung.

Aus der US 8,121,621 B2 ist ein Positionsschätzsystem bekannt, bei dem eine geschätzte Positionsinformation über eine drahtlose Basisstation zu einem mobilen Endgerät übertragen wird, welches diese Positionsinformation dann als eigene aktuelle Position verwenden kann. Die drahtlose Basisstation verwendet eine separate Datenbank, welche auf Anfrage eines mobilen Endgeräts bei der Basisstation durch diese veranlasst wird, eine Position zu berechnen, wobei für die Berechnung unter anderem der Zellenradius des Funkbereichs der Basisstation und zum Beispiel Antennenparameter verwendet werden. Die so berechnete Position wird dann von der Datenbank zur drahtlosen Basisstation übertragen, die die empfangene Position dann an das mobile Endgerät weiterleitet.

Aus der US 2011/0199917 A1 ist ein Verfahren bekannt, nach dem Positionsinformationen unter Geräten eines Netzwerkes ausgetauscht werden können. Hierbei können ein erstes Gerät und ein zweites Gerät eine Bluetooth-Verbindung aufbauen, wobei zum Beispiel das zweite Gerät eine Positionsinformation vom ersten Gerät anfordern kann. Unter Steuerung des ersten Geräts wird eine relative Richtung und/oder relative Entfernung zum zweiten Gerät ermittelt, indem zum Beispiel Signale zwischen dem ersten und zweiten Gerät oder von einem internen Sensor genutzt werden. Das erste Gerät bestimmt dann für das zweite Gerät eine neue Information, indem die Position des ersten Geräts, eine relative Richtung und/oder eine relative Entfernung des zweiten Geräts berücksichtigt werden.

Der vorliegenden Erfindung liegt die Aufgabe zugrunde, ein Verfahren sowie ein System zum Bereitstellen einer Positionsinformation für eine bewegliche Kommunikationseinrichtung zur Verfügung zu stellen, mit denen eine bewegliche Kommunikationseinrichtung schnell, und zuverlässig die eigene Position ohne oder mit geringer eigener Rechenleistung und folglich mit reduziertem Energieverbrauch ermitteln kann. Zusätzlich kann das Risiko einer falschen Positionsermittlung durch Fehler in der Software der beweglichen Kommunikationseinrichtung reduziert werden.

Ein Kerngedanke der Erfindung kann darin gesehen werden, dass wenigstens eine vorbestimmte Positionsinformation für wenigstens eine bewegliche, drahtlose Kommunikationseinrichtung in einer stationären, drahtlosen Kommunikationseinrichtung gespeichert wird, die im Wesentlichen genau dann von der stationären Kommunikationseinrichtung zur beweglichen Kommunikationseinrichtung ausgesendet bzw. übertragen wird, wenn die bewegliche Kommunikationseinrichtung mit der stationären Kommunikationseinrichtung Kontakt aufnimmt. Die vorbestimmte Positionsinformation enthält vorzugsweise Positionskoordinaten und deren Genauigkeit, die den Ort definieren, an welchem sich die bewegliche Kommunikationseinrichtung befinden wird, wenn sie mit der stationären Kommunikationseinrichtung in Kontakt tritt. Vorzugsweise werden die Position der stationären Kommunikationseinrichtung, das geografische Umfeld der stationären Kommunikationseinrichtung und von der beweglichen und/oder stationären Kommunikationseinrichtung abhängige physikalische und/oder geometrische Parameter beim Ermitteln der Positionsinformation berücksichtigt. Das geografische Umfeld legt vorzugsweise wenigstens einen Annäherungsweg oder die dazugehörenden Annäherungsrichtungen, fest, auf dem sich die bewegliche Kommunikationseinrichtung der stationären Kommunikationseinrichtung nähern kann. Die Annäherungsrichtung oder der Annäherungsweg kann durch einen geometrischen Parameter ausgedrückt werden. Ein weiterer geometrischer Parameter kann die Kopplungsstrecke sein, die durch die von der beweglichen und stationären Kommunikationseinrichtung verwendete Funktechnologie bzw. verwendeten Funk-Kommunikationschips definiert wird.

Ein weiterer Aspekt der Erfindung kann darin gesehen werden, dass wenigstens eine vorbestimmte Orientierungsinformation für wenigstens eine bewegliche Kommunikationseinrichtung in einer stationären Kommunikationseinrichtung gespeichert wird, die im Wesentlichen genau dann von der stationären Kommunikationseinrichtung zur beweglichen Kommunikationseinrichtung ausgesendet bzw. übertragen wird, wenn die bewegliche Kommunikationseinrichtung mit der stationären Kommunikationseinrichtung Kontakt aufnimmt. Die vorbestimmte Orientierungsinformation enthält vorzugsweise die Orientierung und deren Genauigkeit der beweglichen Kommunikationseinrichtung zu dem Zeitpunkt, zu welchem sie mit der stationären Kommunikationseinrichtung in Kontakt tritt. Vorzugsweise werden die Position der stationären Kommunikationseinrichtung, das geografische Umfeld der stationären Kommunikationseinrichtung und von der beweglichen und/oder stationären Kommunikationseinrichtung abhängige physikalische Parameter beim Ermitteln der Orientierungsinformation berücksichtigt. Das geografische Umfeld legt vorzugsweise wenigstens einen Annäherungsweg oder die dazugehörenden Annäherungsrichtungen fest, auf dem sich die bewegliche Kommunikationseinrichtung der stationären Kommunikationseinrichtung nähern kann. Ein geometrischer Parameter kann die Kopplungsstrecke sein, die durch die von der beweglichen und stationären Kommunikationseinrichtung verwendete Funktechnologie bzw. verwendeten Funk-Kommunikationschips definiert wird.

Das oben genannte technische Problem wird zum einen durch die Verfahrensschritte des Anspruchs 1 gelöst.

Demnach wird ein Verfahren zum Bereitstellen einer Positionsinformation für eine bewegliche Kommunikationseinrichtung, welche sich einer stationären Kommunikationseinrichtung nähert, zur Verfügung gestellt. In der stationären Kommunikationseinrichtung wird wenigstens eine Positionsinformation bereitgestellt, die die Position und gegebenenfalls die Positionsgenauigkeit einer beweglichen, sich der stationären Kommunikationseinrichtung nähernden Kommunikationseinrichtung festlegt. Die wenigstens eine Positionsinformation wird in Abhängigkeit von der Position und gegebenenfalls der Positionsgenauigkeit der stationären Kommunikationseinrichtung sowie wenigstens einem vorbestimmten geometrischen Parameter ermittelt.

Angemerkt sei, dass eine vorbestimmte Kopplungsstrecke und gegebenenfalls deren Genauigkeit sowie eine vorbestimmte Annäherungsrichtung und gegebenenfalls deren Genauigkeit beispielsweise jeweils einen geometrischen Parameter bilden können.

Angemerkt sei ferner, dass die vorbestimmte Positionsinformation vorzugsweise Positionskoordinaten und gegebenenfalls deren Genauigkeit enthalten kann. Nähert sich die bewegliche Kommunikationseinrichtung der stationären Kommunikationseinrichtung an und erreicht sie einen vorbestimmten Kopplungsabstand, findet zwischen der stationären Kommunikationseinrichtung und der beweglichen Kommunikationseinrichtung eine Kontaktaufnahme bzw. eine Kopplung statt. Im Wesentlichen zum Zeitpunkt der Kontaktaufnahme wird die wenigstens eine Positionsinformation von der stationären Kommunikationseinrichtung über eine drahtlose Kommunikationsverbindung zur beweglichen Kommunikationseinrichtung übertragen. Die bewegliche Kommunikationseinrichtung kann dann, gegebenenfalls nach einer entsprechenden Prüfung, die empfangene Positionsinformation als ihre aktuelle Position zum Zeitpunkt der Kontaktaufnahme verwenden.

Ein Vorteil dieses Verfahrens kann darin gesehen werden, dass die bewegliche Kommunikationseinrichtung keine eigene Rechenleistung zur Verfügung stellen muss, um die eigene aktuelle Position zu bestimmen. Zudem ist es nicht erforderlich, dass die bewegliche Kommunikationseinrichtung über ein eigenes Ortungsgerät, beispielsweise einen GPS-Empfänger verfügen muss. Ein weiterer Vorteil des Verfahrens kann darin gesehen werden, dass jede bewegliche Kommunikationseinrichtung, die sich der stationären Kommunikationseinrichtung nähert und mit dieser in Kontakt tritt, dieselbe präzise Positionsinformation mitgeteilt bekommt. Ein weiterer Vorteil kann darin gesehen werden, dass konstruktive Veränderungen auf dem Annäherungsweg und/oder der Einsatz neuer Kommunikationschips schnell und kostengünstig berücksichtig werden können, indem einfach eine entsprechend neu ermittelte Positionsinformation für die bewegliche Kommunikationseinrichtung in der stationären Kommunikationseinrichtung abgelegt wird.

Angemerkt sei an dieser Stelle, dass es sich bei der beweglichen Kommunikationseinrichtung um eine mobile, drahtlose Kommunikationseinrichtung, wie z. B. ein Mobilfunktelefon, Smartphone, oder PDA oder dergleichen handeln kann. Bei der stationären Kommunikationseinrichtung handelt es sich vorzugsweise um eine ortsfeste, drahtlose Kommunikationseinrichtung, wie z. B. ein NFC-RFID (Near Field Communication - Radio Frequency Identification Device), einen aktiven oder passiven NFC-Chip, einen BlueTooth-Chip oder eine bewegliche Kommunikationseinrichtung mit einem geeigneten Kommunikations-Chip, die als stationäre Kommunikationseinrichtung verwendet werden kann.

Angemerkt sei, dass durch die wenigstens eine Positionsinformation vorzugsweise die Position und gegebenenfalls die Positionsgenauigkeit der beweglichen, sich an die stationäre Kommunikationseinrichtung annährende Kommunikationseinrichtung im Wesentlichen zum Zeitpunkt der Kontaktaufnahme beschrieben wird.

Der geometrische Parameter "Kopplungsstrecke" bezeichnet den Abstand zwischen der stationären Kommunikationseinrichtung und einer beweglichen, sich der stationären Kommunikationseinrichtung nähernden Kommunikationseinrichtung, bei der erstmalig eine Kontaktaufnahme, Paarung bzw. Kopplung zwischen der beweglichen Kommunikationseinrichtung und stationären Kommunikationseinrichtung erfolgt. Die Kopplungsstrecke kann folglich auch als Paarungs- oder Auslösestrecke bezeichnet werden. Bei einem passiven Kommunikationschip, wie z. B. einem passiven NFC-RFID bedeutet Kontaktaufnahme, dass der passive Kommunikationschip durch Funksignale der beweglichen Kommunikationseinrichtung aktiviert wird, um die gespeicherten Positionsinformationen aussenden zu können.

Unter dem geometrischen Parameter "Annäherungsrichtung" kann die Richtung des Annäherungsweges - hier definiert als die Richtung von einem Punkt auf dem Annäherungsweg zur Position der stationären Kommunikationseinrichtung - in einem bestimmten Punkt des Annäherungswegs verstanden werden, wobei dieser Annäherungsweg geometrisch beschrieben werden kann, indem zum Beispiel konstruktiv bedingte, eingeschränkte Annäherungsmöglichkeiten der beweglichen Kommunikationseinrichtung an die stationäre Kommunikationseinrichtung berücksichtigt werden. Die Genauigkeit einer Annäherungsrichtung kann mit stochastischen Mitteln vorab festgelegt werden. Die Annäherungsrichtung kann somit als exakter oder stochastisch definierter Annäherungssektor auf dem Annäherungsweg in an sich bekannter Weise mathematisch beschrieben werden.

Im einfachsten Fall, d.h. wenn ein einziger Annäherungsweg, der als gerader, kürzester Weg zur stationären Einrichtung definiert ist, und zugleich eine hohe Genauigkeit der Annäherungsrichtung konstruktiv gegeben ist, entspricht die Annäherungsrichtung immer ausreichend genau der Bewegungsrichtung der beweglichen Kommunikationseinrichtung, wobei die aktuelle Bewegungsrichtung während der Kopplung gegebenenfalls auch durch entsprechende Sensoren in der stationären und/oder beweglichen Kommunikationseinrichtung bestimmt werden kann.

Die wenigstens eine Positionsinformation kann somit durch die Position und gegebenenfalls durch die Positionsgenauigkeit der stationären Kommunikationseinrichtung, die um einen 1- oder 2- oder 3-dimensionalen Offsetvektor angepasst wird, festgelegt werden. Der Offsetvektor bewirkt eine geometrische Verschiebung der Position der stationären Kommunikationseinrichtung hin zur Position der beweglichen Kommunikationseinrichtung, wobei die Verschiebung vorzugsweise durch die Kopplungsstrecke und die Annäherungsrichtung festgelegt wird.

Die Kopplungsstrecke wird vorzugsweise durch die in der beweglichen und stationären Kommunikationseinrichtung verwendete Funktechnologie, wie zum Beispiel NFC oder BlueTooth, sowie durch die Form, Größe und/oder das Material verwendeter Antennen und Gehäuse definiert. Bei Verwendung der BlueTooth-Technologie kann die Kopplungsstrecke je nach BlueTooth Standard bis zu mehreren Metern betragen, während bei Verwendung der NFC-Technologie die Kopplungsstrecke auf wenige cm, zum Beispiel auf 3 cm beschränkt sein kann.

Zweckmäßiger Weise wird die Kontaktaufnahme zwischen der stationären Kommunikationseinrichtung und der beweglichen Einrichtung sowie der Übertragung der wenigstens einen Positionsinformation gemäß einem Funkkommunikationsprotokoll durchgeführt. Vorzugsweise wird ein Kurzstreckenfunk-Kommunikationsprotokoll verwendet, wie zum Beispiel NFC, da auf kurzen Strecken die Wahrscheinlichkeit nicht erkannter, das Funksignal dämpfender Medien auf der Funkstrecke wesentlich geringer ist und somit die Genauigkeit der realen Kopplungsstrecke besser vorhergesagt werden kann. Als Funkkommunikationsprotokoll kann auch ein FFC (Far Field Communication)-Protokoll, wie zum Beispiel der BlueTooth Standard implementiert sein.

Unter dem Begriff "Funktechnologie" ist in dieser Anmeldung vorzugsweise eine Kommunikationstechnologie zu verstehen, bei der sich zwei relativ zueinander bewegende Kommunikationseinrichtungen erstmals Kontakt miteinander aufnehmen, d. h. ein vorbestimmter Koppelungsabstand zwischen ihnen besteht.

Vorteilhafter Weise legt die wenigstens eine Positionsinformation neben der Position auch die Positionsgenauigkeit einer beweglichen Kommunikationseinrichtung fest. In diesem Fall kann die wenigstens eine Positionsinformation in Abhängigkeit von der Position und der Positionsgenauigkeit der stationären Kommunikationseinrichtung, der vorbestimmten Kopplungsstrecke und deren Genauigkeit sowie der definierten Annäherungsrichtung und deren Genauigkeit ermittelt werden.

Eine flexible Anwendung des Verfahrens kann dadurch erreicht werden, dass in der stationären Kommunikationseinrichtung mehrere unterschiedliche Positionsinformationen bereitgestellt werden, die jeweils in Abhängigkeit von der Position und gegebenenfalls der Positionsgenauigkeit der stationären Kommunikationseinrichtung und wenigstens einem unterschiedlichen geometrischen Parameter - insbesondere einer unterschiedlichen, vorbestimmten Kopplungsstrecke und/oder einer unterschiedlichen, vorbestimmten Annäherungsrichtung und gegebenenfalls auch deren Genauigkeiten - ermittelt werden, und dass in der stationären Kommunikationseinrichtung zu jeder Positionsinformation eine Zusatzinformation abgelegt wird, die die jeweilige Positionsinformation eindeutig kennzeichnet. Jede Zusatzinformation kann Angaben über die jeweilige unterschiedliche, vorbestimmte Kopplungsstrecke und/oder die jeweilige unterschiedliche, vorbestimmte Annäherungsrichtung sowie deren Genauigkeiten oder andere Parameter zur Unterscheidung der Positionsinformationen enthalten. So kann die Zusatzinformation Parameter hinsichtlich der verwendeten Kommunikationstechnologie bzw. der in der stationären Kommunikationseinrichtung eingesetzten Kommunikationschips (z. B. NFC und/oder BlueTooth Chips) enthalten.

Um einer beweglichen Kommunikationseinrichtung zu ermöglichen, ihre plausibelste Position zu bestimmen, können im Wesentlichen zum Zeitpunkt der Kontaktaufnahme mit der beweglichen Kommunikationseinrichtung alle Positionsinformationen und die dazugehörenden Zusatzinformationen von der stationären Kommunikationseinrichtung zur beweglichen Kommunikationseinrichtung übertragen werden. Die Zusatzinformationen werden von der beweglichen Kommunikationseinrichtung ausgewertet. In Abhängigkeit von den ausgewerteten Zusatzinformationen wählt die bewegliche Kommunikationseinrichtung dann die plausibelste Positionsinformation aus.

Alternativ können die Zusatzinformationen auch von der stationären Kommunikationseinrichtung ausgewertet werden. In Abhängigkeit von den ausgewerteten Zusatzinformationen wird dann unter Ansprechen auf eine erfolgreiche Kontaktaufnahme nur die plausibelste Positionsinformation zur beweglichen Kommunikationseinrichtung übertragen. Auf diese Weise kann die Rechenleistung und der Energieverbrauch in der beweglichen Kommunikationseinrichtung reduziert werden.

In der stationären Kommunikationseinrichtung kann der Zeitpunkt der Kontaktaufnahme, vorzugsweise der erstmaligen Kontaktaufnahme, mit der beweglichen Kommunikationseinrichtung ermittelt und zusammen mit der wenigstens einen Positionsinformation zur beweglichen Kommunikationseinrichtung übertragen werden.

Durch die Übertragung der Positionsinformation ist es möglich, dass die bewegliche Kommunikationseinrichtung die wenigstens eine, von der stationären Kommunikationseinrichtung empfangene Positionsinformation mit einer Positionsinformation, die unabhängig von der empfangenen Positionsinformation zu dem übertragenen Zeitpunkt beispielsweise von der beweglichen Kommunikationseinrichtung selbst ermittelt worden ist, in an sich bekannter Weise ausgleicht, um eine statistisch gesehen plausiblere Positionsinformation zu bestimmen.

Das oben genannte technische Problem wird ebenfalls durch die Merkmale des Anspruchs 12 gelöst.

Danach ist ein System zum Bereitstellen einer Positionsinformation für eine bewegliche Kommunikationseinrichtung vorgesehen, welche sich einer stationären Kommunikationseinrichtung nähern kann. Das System weist wenigstens eine stationäre Kommunikationseinrichtung mit wenigstens einem Kommunikationschip zur drahtlosen Kommunikation sowie eine Speichereinrichtung auf, in welcher wenigstens eine Positionsinformation gespeichert ist. Die wenigstens eine Positionsinformation legt die Position und gegebenenfalls die Positionsgenauigkeit einer beweglichen, sich nähernden Kommunikationseinrichtung fest, wobei die wenigstens eine Positionsinformation in Abhängigkeit von der Position und gegebenenfalls der Positionsgenauigkeit der stationären Kommunikationseinrichtung sowie wenigstens einem vorbestimmten geometrischen Parameter ermittelt worden ist. Angemerkt sei, dass eine vorbestimmte Kopplungsstrecke und gegebenenfalls deren vorgegebene Genauigkeit sowie eine definierte Annährungsrichtung und gegebenenfalls deren vorgegebene Genauigkeit jeweils einen geometrischen Parameter bilden. Das System weist wenigstens eine bewegliche Kommunikationseinrichtung mit wenigstens einem Kommunikationschip zur drahtlosen Kommunikation auf. Die Kommunikationschips der beweglichen Kommunikationseinrichtung und der stationären Kommunikationseinrichtung sind zur Kontaktaufnahme ausgebildet. Die Kommunikationschips können die Kontaktaufnahme automatisch einleiten oder, gesteuert durch eine Software zur vordefinierten Kontaktaufnahme aktiviert werden. Die stationäre Kommunikationseinrichtung ist dazu ausgebildet, im Wesentlichen zum Zeitpunkt der Kontaktaufnahme mit der beweglichen Kommunikationseinrichtung die wenigstens eine Positionsinformation zur beweglichen Kommunikationseinrichtung zu übertragen. Diese Positionsinformation kann von der beweglichen Kommunikationseinrichtung dann als ihre aktuelle Position zum Zeitpunkt der Kontaktaufnahme verwendet werden.

Vorzugsweise sind die Kommunikationschips gemäß einem Funk-Kommunikationsprotokoll, insbesondere gemäß dem BlueTooth- und/oder NFC-Protokoll implementiert. Die stationäre Kommunikationseinrichtung kann ein passiver NFC-RFID oder ein passiver FFC (Far Field Communication)-RFID sein, der von der beweglichen Kommunikationseinrichtung bzw. deren Kommunikationschips bei Erreichen der Kopplungsstrecke angeregt wird, die Positionsinformationen und gegebenenfalls die Zusatzinformationen auszusenden, welche von der beweglichen Kommunikationseinrichtung empfangen werden.

Gemäß einer vorteilhaften Ausgestaltung kann die stationäre Kommunikationseinrichtung dazu ausgebildet sein, ihre Position, die dazugehörende Positionsgenauigkeit und die wenigstens eine Positionsinformation automatisch zu bestimmen.

Um die Flexibilität des Systems zu erhöhen, kann die stationäre Kommunikationseinrichtung unterschiedliche Kommunikationschips aufweisen, in denen verschiedene, Funktechnologien implementiert sein können. Zudem können verschiedene Positionsinformationen in der Speichereinrichtung abgelegt sein, wobei jede Positionsinformation in Abhängigkeit von der Position und gegebenenfalls der Positionsgenauigkeit der stationären Kommunikationseinrichtung und wenigstens einem unterschiedlichen geometrischen Parameter - insbesondere einer unterschiedlichen, vorbestimmten Kopplungsstrecke und/oder einer unterschiedlichen, vorbestimmten Annährungsrichtung und gegebenenfalls deren unterschiedlichen Genauigkeiten - ermittelt worden ist. In der Speichereinrichtung kann zu jeder Positionsinformation eine Zusatzinformation abgelegt sein, die die jeweilige Positionsinformation eindeutig kennzeichnet. Somit kann für jede Funktechnologie bzw. für jeden implementierten Kommunikationschip ein unabhängiger Prozess zur Übermittlung der wenigstens einen Positionsinformation durchgeführt werden.

Gemäß einer vorteilhaften Ausbildung kann die stationäre Kommunikationseinrichtung dazu ausgebildet sein, im Wesentlichen zum Zeitpunkt einer Kontaktaufnahme mit der beweglichen Kommunikationseinrichtung alle gespeicherten Positionsinformationen und die dazu gehörenden Zusatzinformationen zur beweglichen Kommunikationseinreichung zu übertragen. Die bewegliche Kommunikationseinrichtung kann dazu ausgebildet sein, die Zusatzinformationen auszuwerten und in Abhängigkeit von den ausgewerteten Zusatzinformationen die plausibelste Positionsinformation als aktuelle Position auszuwählen.

Vorteilhafterweise ist die stationäre und/oder die bewegliche Kommunikationseinrichtung dazu ausgebildet, die die Bewegungsrichtung der beweglichen Kommunikationseinrichtung und gegebenenfalls deren Genauigkeit an die stationäre Kommunikationseinrichtung zu ermitteln, da die bewegliche Kommunikationseinrichtung damit auch zusätzliche eine Information über ihre aktuelle Bewegungsrichtung erhält und gegebenenfalls nutzen kann.

Angemerkt sei an dieser Stelle, dass die wenigstens eine vorbestimmte Positionsinformation eine strenge Fehlerfortpflanzung auf der Basis einer stochastischen Fehlerfortpflanzung enthalten kann.

Die Erfindung wird nachfolgend anhand eines Ausführungsbeispiels in Verbindung mit den beiliegenden Zeichnungen näher erläutert. Es zeigen:
- Fig. 1: das Blockschaltbild eines beispielhaften Systems zum Bereitstellen einer Positionsinformation für eine bewegliche Kommunikationseinrichtung, und
- Fig. 2: die schematische Darstellung der Positionen der stationären und der beweglichen Kommunikationseinrichtung und deren Fehlerellipsen sowie der Annäherungsrichtung und der Kopplungsstrecke und deren Genauigkeiten zur Ermittlung der Positionsinformation der in Fig. 1 gezeigten beweglichen Kommunikationseinrichtung.

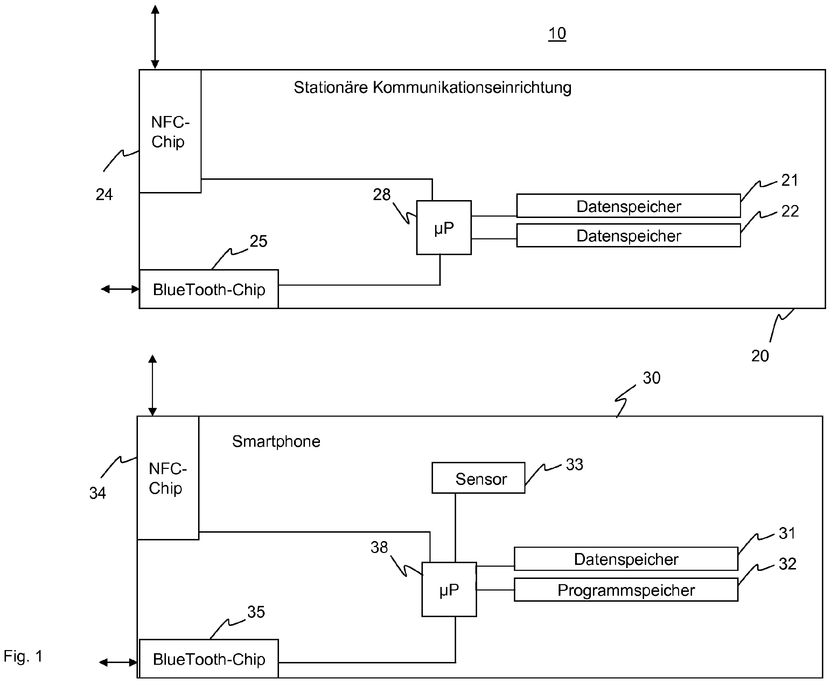

Fig. 1 zeigt ein beispielhaftes Kommunikationssystem 10 zum Bereitstellen wenigstens einer Positionsinformation und/oder Orientierungsinformation für wenigstens eine bewegliche Kommunikationseinrichtung 30. Das System 10 enthält beispielsweise eine stationäre Kommunikationseinrichtung 20 und eine bewegliche Kommunikationseinrichtung 30. Bei der beweglichen Kommunikationseinrichtung 30 handelt es sich beispielsweise um ein Smartphone.

Das Smartphone 30 weist beispielsweise einen Programmspeicher 32 auf, in welchem unter anderem Programme zur Steuerung der üblichen Smartphone-Funktionen sowie ein Programm, welches die Kommunikation der beweglichen Kommunikationseinrichtung 30 mit der stationären Kommunikationseinrichtung 20 gemäß einem Funkkommunikationsprotokoll, insbesondere nach dem NFC Standard, steuert, abgelegt sein können. Weiterhin enthält das Smartphone 30 einen Datenspeicher 31, in welchem vorzugsweise die von der stationären Kommunikationseinrichtung 20 übertragenen Datensätze abgelegt werden können. Wie weiter unten noch näher ausgeführt, enthalten diese Datensätze wenigstens eine Positionsinformation und gegebenenfalls Zusatzinformationen.

In dem Smartphone 30 kann ein Kurzstrecken-Funkkommunikationschip, beispielsweise ein NFC-Chip 34 mit einer Funk-Schnittstelle implementiert sein. Eine Information über den verwendeten NFC-Chip 34 kann im Datenspeicher 31 abgelegt werden. Denkbar ist, dass im Smartphone 30 weitere Funk-Kommunikationschips, wie zum Beispiel ein BlueTooth-Chip 35 implementiert sein können. Weiterhin ist ein Mikroprozessor 38 vorgesehen, der unter Ansprechen auf die im Programmspeicher 32 abgelegten Befehlssätze sowohl den normalen Betrieb des Smartphones 30 als auch die Funkkommunikation des Smartphones 30 über den NFC-Chip 34 mit einem in der stationären Kommunikationseinrichtung 20 implementierten NFC-Chip 24 steuern kann. Das Smartphone 34 kann auch einen GPS-Empfänger (nicht dargestellt) zur eigenen Positionsbestimmung enthalten. Zudem kann im Smartphone 30 ein Sensor 33 zum Erkennen einer Bewegungs- oder Annährungsrichtung implementiert sein.

Die stationäre Kommunikationseinrichtung 20 kann beispielsweise neben dem NFC-Chip 24 noch einen BlueTooth Chip 25 und/oder weitere Funk-Kommunikations-Chips (nicht gezeigt) aufweisen, die jeweils eine Funk-Schnittstelle enthalten. Als stationäre Kommunikationseinrichtung könnte auch ein passiver NFC-RFID dienen. Anstelle der gezeigten Kommunikationschips 24 und 25 kann jeder andere Funk-Kommunikationschip eingesetzt werden. Die stationäre Kommunikationseinrichtung 20 weist weiterhin einen Datenspeicher 21 auf, in welchem wenigstens eine vorab ermittelte Positionsinformation abgelegt ist, die beispielsweise für das sich annährende Smartphone 30 bereitgestellt wird. Wie weiter unten noch näher ausgeführt kann die abgelegte Positionsinformation vorzugsweise Positionskoordinaten und deren Genauigkeit enthalten, die den Ort definieren, an welchem sich zum Beispiel das Smartphone 30 befinden wird, wenn es mit der stationären Kommunikationseinrichtung 20 in Kontakt tritt. Ferner kann ein Programmspeicher 22 vorgesehen sein, in dem ein Programm abgelegt ist. Auf dieses Programm kann, sofern vorhanden, ein Mikroprozessor 28 zugreifen, um eine Kommunikation über den BlueTooth-Chip 25 und/oder den NFC-Chip 24 mit einer beweglichen Kommunikationseinrichtung, zum Beispiel mit dem NFC-Chip 34 des Smartphones 30, zu steuern. Der Mikroprozessor 28 kann auch auf den Datenspeicher 21 zugreifen, um die darin gespeicherten Daten über den NFC-Chip 24 und/oder den BlueTooth-Chip 25 zu einer beweglichen Kommunikationseinrichtung, wie zum Beispiel dem Smartphone 30, zu übertragen, sobald eine Paarung bzw. Kontaktaufnahme zwischen beiden Kommunikationseinrichtungen erfolgt ist. Da die beispielhafte stationäre Kommunikationseinrichtung 20 sowohl einen BlueTooth-Chip als auch einen NFC-Chip enthält, ist das System 10 geeignet, Positionsinformationen für bewegliche Kommunikationseinrichtungen bereit zu stellen, die jeweils einen NFC-Chip und/oder einen BlueTooth-Chip enthalten.

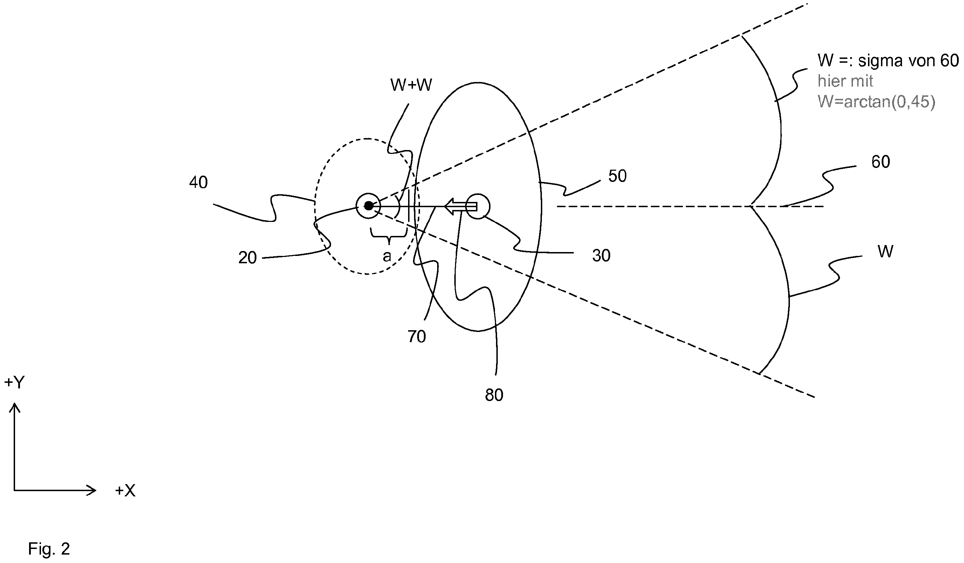

Nunmehr wird die Inbetriebnahme und Funktionsweise des in Fig. 1 dargestellten Systems 10 in Verbindung mit der Fig. 2 näher erläutert.

Angenommen sei zunächst, dass die stationäre Kommunikationseinrichtung 20 an einer vorbestimmten Stelle aufgestellt worden ist und eine Positionsinformation zum Beispiel für das Smartphone 30 vor dem eigentlichen Betrieb ermittelt und im Datenspeicher 21 abgelegt werden soll. Das Smartphone 30 bewege sich aktuell, wie in Fig. 2 durch den Pfeil 80 angedeutet, auf die stationäre Kommunikationseinrichtung 20 zu. Sowohl das Smartphone 30 als auch die stationäre Kommunikationseinrichtung 20 seien betriebsbereit.

Die Positionsinformation für das Smartphone 30 hängt von der Position und gegebenenfalls von der Positionsgenauigkeit der stationären Kommunikationseinrichtung 20 und beispielsweise zwei geometrischen Parametern ab, die insbesondere durch das geografische Umfeld der stationären Kommunikationseinrichtung 20 und die in der stationären Kommunikationseinrichtung 20 und dem Smartphone 30 implementierten Funk-Kommunikationschips bestimmt werden. So entspricht beispielsweise der durch die NFC-Chips 24 und 34 festgelegte geometrische Parameter der Kopplungsstrecke 70 und gegebenenfalls deren Genauigkeit a, während der durch das geografische Umfeld der stationären Kommunikationseinrichtung 20 festgelegte geometrische Parameter einer Annäherungsrichtung 60 und gegebenenfalls deren Genauigkeit W entspricht, die den möglichen Zugang des Smartphones 30 zur stationären Kommunikationseinrichtung 20 festlegt.

Eine Möglichkeit, die Positionsinformation für das Smartphone 30 zu ermitteln, besteht darin, die Koordinaten des Smartphones 30 aus den Koordinaten der stationären Kommunikationseinrichtung 20 und einem von den geometrischen Parametern abhängigen Offsetvektor, der von der stationären Kommunikationseinrichtung 20 zum Smartphone 30 weist, zu ermitteln und die Genauigkeit der Koordinaten des Smartphones 30 aus einer Fehlerfortpflanzung der geometrischen Beziehung zwischen der stationären Kommunikationseinrichtung 20, dem Smartphone 30 und dem Vektor zu ermitteln. Die Genauigkeit der Koordinaten der stationären Kommunikationseinrichtung 20 können z. B. als Fehlerellipse 40 vorliegen, die Genauigkeit des Vektors kann z. B. durch die Längengenauigkeit a der Kopplungsstrecke 70 und der Genauigkeit W der Annährungsrichtung 60 stochastisch beschrieben werden. Die hieraus ermittelte Genauigkeit der Koordinaten des Smartphones 30 kann dann z. B. durch die Fehlerellipse 50 beschrieben werden. Fig. 2 zeigt eine vereinfachte, grafische Darstellung aller Größen zur Ermittlung der Positionsinformation - Koordinaten und deren Genauigkeiten - des Smartphones 30.

Die Stelle, an der die stationäre Kommunikationseinrichtung 20 aufgestellt ist, kann in an sich bekannter Weise eingemessen oder beispielsweise mittels eines GPS-Empfängers (nicht dargestellt) von der stationären Kommunikationseinrichtung selbst bestimmt. Die ermittelten Positionskoordinaten und gegebenenfalls die Genauigkeit der Positionskoordinaten der stationären Kommunikationseinrichtung können im Datenspeicher 21 abgelegt werden. In Fig. 2 ist die Position der stationären Kommunikationseinrichtung 20 durch einen kleinen Kreis mit einem schwarzen Mittelpunkt dargestellt, um anzudeuten, dass die Positionskoordinaten bekannt sind. Die um die stationäre Kommunikationseinrichtung 20 gelegte gestrichelte Fehlerellipse 40 erfasst die

Positionsungenauigkeit der stationären Kommunikationseinrichtung 20.

Als nächstes werden beispielhaft die Kopplungsstrecken bezüglich des NFC-Chips 24 und des BlueTooth-Chips 25 mit ihren jeweiligen korrespondierenden Chips 34 bzw. 35 ermittelt, wobei Fig. 2 lediglich die Kopplungsstrecke 70 und deren Genauigkeit a bezüglich des NFC-Chips 24 und des NFC-Chips 34 zeigt. Unter Kopplungsstrecke wird der Abstand zwischen der stationären Kommunikationseinrichtung 20 und dem Smartphone 30 verstanden, bei dessen Erreichen erstmalig eine Kontaktaufnahme und folglich ein Auslesen und Übertragen der im Datenspeicher 21 abgelegten Daten zum Smartphone 30 erfolgt. Angemerkt sei, dass der Zeitpunkt der ersten Kontaktaufnahme im Wesentlichen mit dem Zeitpunkt der Übertragung von Daten aus dem Datenspeicher 21 der stationären Kommunikationseinrichtung 20 zum Smartphone 30 zusammenfallen kann. Dieser Zeitpunkt kann von der stationären Kommunikationseinrichtung 20 ermittelt und ebenfalls zum Smartphone 30 übertragen werden.

Bei der Ermittlung der Positionsinformation für das Smartphone 30 können in an sich bekannter Weise Ungenauigkeiten der Kopplungsstrecke 70 durch die Standardabweichung a erfasst werden, wie in Fig. 2 dargestellt. Bei der Ermittlung der Kopplungsstrecken können neben den verwendeten Funktechnologien bzw. Kommunikationschips auch noch geometrische und/oder physikalische Angaben hinsichtlich der Chip-Antennen und der Gehäuse, in denen die stationäre Kommunikationseinrichtung 20 bzw. das Smartphone 30 angeordnet sind, berücksichtigt werden. Die dem NFC-Chip 24 und dem BlueTooth-Chip 25 zugeordneten Kopplungsstrecken und deren Genauigkeiten können ebenfalls im Datenspeicher 21 abgelegt werden.

Fig. 2 zeigt schematisch am anderen Ende der Kopplungsstrecke mittels eines kleinen Kreises die Position des Smartphones 30. Der kleine Kreis ohne schwarzen Mittelpunkt deutet an, dass die Positionskoordinaten des Smartphones 30 vor der Koppelung nicht bekannt sind, aber durch die noch zu ermittelnde Positionsinformation, welche im Datenspeicher 21 abgelegt wird, festgelegt sind. Die Fehlerellipse 50 berücksichtigt resultierende Ungenauigkeiten des Aufenthaltsorts des Smartphones 30 zum Zeitpunkt der Koppelung durch die Übertragung der Positionsinformation sofort nach der Koppelung.

Nunmehr wird noch die wahrscheinlichste Annäherungsrichtung 60 bzw. das notwendige Teilstück des wahrscheinlichsten Annäherungswegs und deren Genauigkeiten in an sich bekannter Weise geometrisch beschrieben bzw. ermittelt. Auch diese Daten können im Datenspeicher 21 hinterlegt werden.

Wie in der Fig. 2 angedeutet, ist im vorliegenden Beispiel zu berücksichtigen, dass die Annäherungsrichtung 60 aufgrund der besonderen Lage der stationären Kommunikationseinrichtung 20 in gegebener Weise eingeschränkt ist und auf dem relevanten Teilstück konstant sei. Wie in Fig. 2 gezeigt, ist zudem die Genauigkeit W der Annäherungsrichtung 60 bekannt. Mit Hilfe geeigneter, bekannter geometrischer und stochastischer Verfahren kann nunmehr die Positionsinformation des Smartphones 30 z. B. durch Vektorrechnung und gegebenenfalls auch unter Berücksichtigung der in Fig. 2 gezeigten Fehlerellipse 40 der stationären Kommunikationseinrichtung 20, der Standardabweichung a der Kopplungsstrecke 70, der Richtungsgenauigkeit W der Annäherungsrichtung 60 ermittelt werden. Auf diese Weise erhält man eine Positionsinformation, welche die Positionskoordinaten und deren Genauigkeit hinsichtlich der Position des Smartphones 30 zu dem Zeitpunkt beinhaltet, zu dem das Smartphone 30 und die stationäre Kommunikationseinrichtung 20 erstmalig Kontakt miteinander aufnehmen.

In ähnlicher Weise kann die Positionsinformation für eine bewegliche Kommunikationseinrichtung ermittelt werden, welche anstelle eines NFC-Chips einen BlueTooth-Chip oder einen anderen geeigneten Funk-Kommunikations-Chips verwendet.

Die beiden ermittelten Positionsinformationen werden nunmehr im Datenspeicher 21 abgelegt. Zweckmäßiger Weise wird zu jeder Positionsinformation im Datenspeicher 21 eine Zusatzinformation abgelegt, welche die jeweilige Positionsinformation eindeutig kennzeichnet. Insbesondere kann jede Zusatzinformation Angaben über den verwendeten Kommunikationschip und/oder die angewandte Funktechnologie enthalten. Auf diese Weise wird jede gespeicherte Positionsinformation dem jeweiligen Kommunikationschip zugeordnet.

Angemerkt sei an dieser Stelle, dass die stationäre Kommunikationseinrichtung 20 auch an einem Ort aufgestellt sein kann, der eine Annäherung einer beweglichen Kommunikationseinrichtung an die stationäre Kommunikationseinrichtung 20 aus mehreren festgelegten Richtungen erlaubt. In diesem Fall können für jede gegebene Annäherungsrichtung mindestens eine Positionsinformation auf die zuvor beschriebene Weise ermittelt und im Datenspeicher abgelegt werden. Für jede Positionsinformation kann eine Zusatzinformation im Datenspeicher 21 abgelegt werden, die unter anderem Angaben über die jeweilige Annäherungsrichtung und die verwendete Funk-Technologie, im vorliegenden Beispiel z. B. auch die BlueTooth- oder NFC-Funktechnologie enthält.

Ferner sei angemerkt, dass die Positionsinformationen, welche im Datenspeicher 21 hinterlegt sind, gegenüber einem vorgegebenen Koordinatensystem ermittelt worden sein können. Wenn die bewegliche Kommunikationseinrichtung 30 eine Positionsinformation in einem anderen Koordinatensystem benötigt, so muss die Kommunikationseinrichtung 30 dazu ausgebildet sein, eine Koordinatensystemtransformation durchzuführen.

Nunmehr sei angenommen, dass sich das Smartphone 30 innerhalb des in Fig. 2 gezeigten Annäherungssektors 2W der stationären Einrichtung 20 nähert. Sobald sich das Smartphone 30 und die stationäre Kommunikationseinrichtung 20 in einem definierten Abstand, das ist in etwa die Kopplungsstrecke 70, befinden, findet eine erstmalige funkbasierte Kopplung bzw. Kontaktaufnahme zwischen dem NFC-Chip 24 der stationären Kommunikationseinrichtung 20 und dem NFC-Chip 34 des Smartphones 30 statt. Unter Ansprechen auf eine erfolgreiche Kontaktaufnahme, liest der Mikroprozessor 28 die gespeicherten Positionsinformationen und die dazu gehörenden Zuatzinformationen aus dem Datenspeicher 21 aus und überträgt diese Informationen über den NFC-Chip 24 zum NFC-Chip 34 des Smartphones 30. Der Zeitpunkt der erstmaligen Kontaktaufnahme entspricht im Wesentlichen dem Zeitpunkt der Übertragung der Positionsinformationen und Zusatzinformationen. Auf diese Weise wird sichergestellt, dass die zum Zeitpunkt der erstmaligen Kontaktaufnahme zum Smartphone 30 übertragene Positionsinformation die zu diesem Zeitpunkt aktuelle Position des Smartphones 30 bzw. des NFC-Chips 24 definiert. Die stationäre Kommunikationseinrichtung 20 kann auch den Zeitpunkt der erstmaligen Kontaktaufnahme ermitteln und diesen ebenfalls zum Smartphone 30 übertragen.

Das Smartphone 30 beziehungsweise der Mikroprozessor 38 ist dazu ausgebildet, die empfangenen Zusatzinformationen auszuwerten, indem er die im Datenspeicher 31 abgelegte Zusatzinformation mit den empfangenen Zusatzinformationen vergleicht. Der Mikroprozessor 38 erkennt nunmehr, dass eine NFC-Kommunikation aufgebaut wurde und das Smartphone 30 einen NFC-Chip 34 enthält. Folglich wählt der Mikroprozessor 38 die empfangene Positionsinformation, deren Zusatzinformation auf den NFC-Chip 24 hinweist, als plausibelste Positionsinformation aus. Die ausgewählte Positionsinformation entspricht der genauen Position des Smartphones 30 zum Zeitpunkt der erstmaligen Kontaktaufnahme. Diese Positionsinformation wird zur weiteren Verwertung im Datenspeicher 31 abgelegt.

Denkbar ist auch, dass das Smartphone 30 über einen eigenen GPS-Empfänger (nicht dargestellt) verfügt, der die aktuelle Position des Smartphones 30 bestimmen kann. In diesem Fall kann das Smartphone 30 dazu ausgebildet sein, die ausgewählte Positionsinformation mit einer intern bestimmten Position, die zum Zeitpunkt der ersten Kontaktaufnahme bestimmt worden ist, in an sich bekannter Weise auszugleichen, um eine plausiblere Positionsinformation zu erhalten.

Bei einem alternativen Szenario ist das Smartphone 30 dazu ausgebildet, bei der ersten Kontaktaufnahme eine im Datenspeicher 31 abgelegte Zusatzinformation zur stationären Kommunikationseinrichtung 20 zu übertragen, die neben der Aufforderung, Positionsinformationen zu übertragen auch die Information über den verwendeten Kommunikationschip und gegebenenfalls weitere relevante Parameter zur Vorauswahl einer einzigen Positionsinformation enthält. In diesem Fall kann die stationäre Kommunikationseinrichtung 20 bzw. der Mikroprozessor 28 dazu ausgebildet sein, nur die Positionsinformation, die für den NFC-Chip 34 hinterlegt worden ist, zum Smartphone 30 zu übertragen.

Gemäß einem weiteren Szenario können im Datenspeicher 21 der stationären Kommunikationseinrichtung weitere Positionsinformationen für sich annähernde bewegliche Kommunikationseinrichtungen gespeichert sein, die nicht nur unterschiedliche Kopplungsstrecken infolge unterschiedlicher Kommunikationschips berücksichtigten, sondern auch mehrere unterschiedliche Annährungsrichtungen einer beweglichen Kommunikationseinrichtung an die stationäre Kommunikationseinrichtung. In diesem Fall überträgt die stationäre Kommunikationseinrichtung 20 nach einer erstmaligen Kontaktaufnahme mit dem Smartphone 30 alle gespeicherten Positionsinformationen zum Smartphone 30. Das Smartphone 30 kann in diesem Fall einen Sensor 33 aufweisen, der die Annäherungsrichtung an die stationäre Kommunikationseinrichtung 20 ermitteln kann. Durch einen Vergleich der im Datenspeicher 31 hinterlegten Zusatzinformation über den verwendeten Funk-Kommunikationschip 34 und der intern ermittelten Annäherungsrichtung mit den empfangenen Zusatzinformationen findet der Mikroprozessor 38 die Positionsinformation, die der Funk-Chipkombination und der gespeicherten Annäherungsrichtung und den sonstigen relevanten Parametern und der ermittelten Annäherungsrichtung im Wesentlichen entspricht. Die gefundene Positionsinformation wird dann als plausibelste Positionsinformation des Smartphones 30 ausgewählt und im Datenspeicher 31 zur weiteren Verwendung abgelegt.

Zusätzlich oder alternativ zur vom Sensor 33 ermittelten Annäherungsrichtung kann auch eine im Smartphone 30 gegebenenfalls vorliegende aktuelle Positionsinformation vom Smartphone 30 verwendet werden, um eine Annäherungsrichtung zu berechnen, wenn die stationäre Kommunikationseinrichtung 20 zusätzlich eine eindeutige Kennung überträgt, anhand derer das Smartphone 30 die stationäre Kommunikationseinrichtung 20 identifizieren und aus einer Datenbank deren Position entnehmen kann.

Ein Vorteil des in Fig. 1 dargestellten Systems 10 kann darin gesehen werden, dass das System in sehr einfacher Weise erweitert, dass heißt für weitere bewegliche Kommunikationseinrichtungen mit unterschiedlichen Kommunikationschips zugänglich gemacht werden kann, indem die stationäre Kommunikationseinrichtung 20 um weitere Funk-Kommunikationschips erweitert wird und hierfür weitere Positionsinformationen im Datenspeicher 21 hinterlegt werden, die bei einer erstmaligen Kontaktaufnahme mit einer beweglichen Kommunikationseinrichtung zu dieser übertragen werden.

Ein Vorteil des Systems 10 kann auch darin gesehen werden, dass alle geeignet ausgebildeten beweglichen Kommunikationseinrichtungen immer dieselbe, im Datenspeicher 21 der stationären Kommunikationseinrichtung gespeicherte präzise Positionsinformation erhalten, sofern die beweglichen Kommunikationseinrichtungen nur die gleichen Auswahlkriterien für die erste Kopplung erfüllen.

Die stationäre Kommunikationseinrichtung 20 kann ferner dazu ausgebildet ist, neben der wenigstens einen Positionsinformation gegebenenfalls mindestens auch eine Orientierungsinformationen - Orientierung und deren Genauigkeit einer beweglichen Kommunikationseinrichtung - für die Orientierung der beweglichen Kommunikationseinrichtung 30, und zwar gültig zum Zeitpunkt der Kontaktaufnahme bereitzustellen. Die Orientierungsinformation kann in ähnlicher Weise wie die Positionsinformation in Abhängigkeit einer vorgegebenen Kopplungsstrecke, einem vorgegebenen Annäherungsweg und gegebenenfalls einer vordefinierten, eingeschränkten Orientierung auf dem Annäherungsweg ermittelt werden. Im Wesentlichen zum Zeitpunkt der ersten Kontaktaufnahme überträgt die stationäre Kommunikationseinrichtung auch die wenigstens eine Orientierungsinformation zum Smartphone 30, welches somit auch über seine zum Zeitpunkt der Kontaktaufnahme aktuelle Orientierung verfügt.

Das Smartphone 30 kann dazu ausgebildet sein, die Entkopplung von der stationären Kommunikationseinrichtung 20 zu ermitteln. Entkopplung bedeutet hierbei, dass das Smartphone 30 sich von der stationären Kommunikationseinrichtung 20 über die Kopplungsstrecke hinaus entfernt hat, sodass die Kommunikationsverbindung abbricht. Die bereits im Datenspeicher 31 zum Zeitpunkt der Kontaktaufnahme abgelegten Positions- und gegebenenfalls Orientierungsinformationen können zum Entkopplungszeitpunkt erneut als die aktuelle Position und/oder Orientierung des Smartphones 30 von diesem verwendet werden.

## Patentansprüche

1. Verfahren zum Bereitstellen einer Positionsinformation für eine bewegliche Kommunikationseinrichtung (30), die sich einer stationären Kommunikationseinrichtung (20) nähert, mit folgenden Schritten:
a) Speichern, in einer stationären Kommunikationseinrichtung (20), wenigstens einer Positionsinformation, die die Position und gegebenenfalls die Positionsgenauigkeit einer beweglichen, sich der stationären Kommunikationseinrichtung (20) nähernden Kommunikationseinrichtung (30) festlegt, wobei die wenigstens eine Positionsinformation in Abhängigkeit von der Position und gegebenenfalls von der Positionsgenauigkeit der stationären Kommunikationseinrichtung (20) und wenigstens einem vorbestimmten geometrischen Parameter vorab ermittelt worden ist;
b) erstmalige Kontaktaufnahme zwischen der stationären Kommunikationseinrichtung (20) und der beweglichen Kommunikationseinrichtung (30), sobald zwischen der beweglichen Kommunikationseinrichtung (30) und der stationären Kommunikationseinrichtung (20) eine vorbestimmte Kopplungsstrecke erreicht worden ist; und
c) Übertragen, im Wesentlichen zum Zeitpunkt der erstmaligen Kontaktaufnahme, der wenigstens einen gespeicherten Positionsinformation von der stationären Kommunikationseinrichtung (20) über eine drahtlose Kommunikationsverbindung zur beweglichen Kommunikationseinrichtung (30).

2. Verfahren nach Anspruch 1
**dadurch gekennzeichnet, dass**
eine vorbestimmte Kopplungsstrecke und gegebenenfalls deren Genauigkeit und/oder eine vorbestimmte Annäherungsrichtung und gegebenenfalls deren Genauigkeit jeweils einen geometrischen Parameter bilden.

3. Verfahren nach Anspruch 1 oder 2,
**dadurch gekennzeichnet, dass**
die Kontaktaufnahme zwischen der stationären Kommunikationseinrichtung (20) und der beweglichen Kommunikationseinrichtung (30) sowie die Übertragung der wenigstens einen Positionsinformation gemäß einem Funk-Kommunikationsprotokoll durchgeführt wird.

4. Verfahren nach Anspruch 3
**dadurch gekennzeichnet, dass**
das Funk-Kommunikationsprotokoll ein Kurzstreckenfunk-Kommunikationsprotokoll, insbesondere NFC, oder ein Kommunikationsprotokoll für größere Strecken, insbesondere gemäß einem BlueTooth Standard ist.

5. Verfahren nach einem der Ansprüche 2 bis 4,
**dadurch gekennzeichnet, dass**
gemäß Schritt a) in der stationären Kommunikationseinrichtung (20) verschiedene Positionsinformationen für die bewegliche Kommunikationseinrichtung (30) bereitgestellt werden, wobei jede Positionsinformation in Abhängigkeit von der Position und gegebenenfalls der Positionsgenauigkeit der stationären Kommunikationseinrichtung (20), einer unterschiedlichen, vorbestimmten Kopplungsstrecke und gegebenenfalls deren Genauigkeit und/oder einer unterschiedlichen, vorbestimmten Annäherungsrichtung und gegebenenfalls deren Genauigkeit ermittelt wird, und dass in der stationären Kommunikationseinrichtung (20) zu jeder Positionsinformation eine Zusatzinformation abgelegt wird, die die jeweilige Positionsinformation eindeutig kennzeichnet.

6. Verfahren nach Anspruch 5,
**dadurch gekennzeichnet, dass**
in Schritt c) alle Positionsinformationen und die dazugehörenden Zusatzinformationen zur bewegliche Kommunikationseinrichtung (30) übertragen werden, dass die Zusatzinformationen von der beweglichen Kommunikationseinrichtung (30) ausgewertet werden und in Abhängigkeit von den ausgewerteten Zusatzinformationen die plausibelste Positionsinformation für die Position der beweglichen Kommunikationseinrichtung (30) ausgewählt wird.

7. Verfahren nach Anspruch 5,
**dadurch gekennzeichnet, dass**
die Zusatzinformationen von der stationären Kommunikationseinrichtung (20) ausgewertet werden und in Abhängigkeit von den ausgewerteten Zusatzinformationen in Schritt b) die plausibelste Positionsinformation zur beweglichen Kommunikationseinrichtung (30) übertragen wird.

8. Verfahren nach einem der vorstehenden Ansprüche,
**dadurch gekennzeichnet, dass**
in der stationären Kommunikationseinrichtung (20) der Zeitpunkt der Kontaktaufnahme mit der beweglichen Kommunikationseinrichtung ermittelt wird und dass in Schritt c) der ermittelte Zeitpunkt zur beweglichen Kommunikationseinrichtung (30) übertragen wird.

9. Verfahren nach einem der Ansprüche 1 bis 8,
**dadurch gekennzeichnet, dass**
in der beweglichen Kommunikationseinrichtung (30) mittels einer separaten Positionsbestimmung wenigstens eine weitere Positionsinformation ermittelt wird, und dass
in Abhängigkeit von der in Schritt c) empfangenen Positionsinformation und der wenigstens einen weiteren Positionsinformation eine plausiblere Positionsinformation berechnet wird.

10. Verfahren nach einem der vorstehenden Ansprüche,
**dadurch gekennzeichnet, dass**
die Positionsinformationen Positionskoordinaten und deren Genauigkeit enthalten.

11. Verfahren nach einem der vorstehenden Ansprüche,
**dadurch gekennzeichnet, dass**
in Schritt a) in der stationären Kommunikationseinrichtung (20), wenigstens eine Orientierungsinformation, die die Orientierung der beweglichen, sich nähernden Kommunikationseinrichtung (30) festlegt, bereitgestellt wird, und dass in Schritt c) im Wesentlichen zum Zeitpunkt der Kontaktaufnahme, die wenigstens eine Orientierungsinformation von der stationären Kommunikationseinrichtung (20) über eine drahtlose Kommunikationsverbindung zur beweglichen Kommunikationseinrichtung (30) übertragen wird.

12. System (10) zum Bereitstellen einer Positionsinformation für eine bewegliche Kommunikationseinrichtung (30), die sich einer stationären Kommunikationseinrichtung (20) nähern kann, mit folgenden Merkmalen:
- wenigstens eine stationäre Kommunikationseinrichtung (20) mit wenigstens einem Kommunikationschip (24, 25) zur drahtlosen Kommunikation und einer Speichereinrichtung (21), in welcher wenigstens eine Positionsinformation gespeichert ist, die die Position und gegebenenfalls die Positionsgenauigkeit einer beweglichen Kommunikationseinrichtung (30) festlegt, wobei die wenigstens eine Positionsinformation in Abhängigkeit von der Position und gegebenenfalls der Positionsgenauigkeit der stationären Kommunikationseinrichtung (20) und wenigstens einem vorbestimmten geometrischen Parameter vorab ermittelt worden ist, und
- wenigstens eine bewegliche Kommunikationseinrichtung (30) mit wenigstens einem Kommunikationschip (34, 35) zur drahtlosen Kommunikation, wobei die Kommunikationschips (24, 34; 25, 35) zur erstmaligen Kontaktaufnahme ausgebildet sind, sobald zwischen der beweglichen Kommunikationseinrichtung (30) und der stationären Kommunikationseinrichtung (20) eine vorbestimmte Kopplungsstrecke erreicht worden ist, und wobei die stationäre Kommunikationseinrichtung (20) dazu ausgebildet ist, im Wesentlichen zum Zeitpunkt der erstmaligen Kontaktaufnahme mit der beweglichen Kommunikationseinrichtung (30) die wenigstens eine gespeicherte Positionsinformation zur beweglichen Kommunikationseinrichtung (30) zu übertragen.

13. System nach Anspruch 12,
**dadurch gekennzeichnet, dass**
eine vorbestimmte Kopplungsstrecke und gegebenenfalls deren Genauigkeit und eine vorbestimmte Annäherungsrichtung und gegebenenfalls deren Genauigkeit jeweils einen geometrischen Parameter bilden.

14. System nach Anspruch 12 oder 13,
**dadurch gekennzeichnet, dass**
die Kommunikationschips (24, 25, 34, 35) gemäß einem Funk-Kommunikationsprotokoll, insbesondere gemäß dem BlueTooth- und/oder NFC-Protokoll implementiert sind und/oder die stationäre Kommunikationseinrichtung (20) ein passiver NFC-RFID oder ein passiver FFC-RFID ist.

15. System nach Anspruch 12 bis 14,
**dadurch gekennzeichnet, dass**
die stationäre Kommunikationseinrichtung (20) dazu ausgebildet ist, ihre Position, die dazugehörende Positionsgenauigkeit und die wenigstens eine Positionsinformation der beweglichen Kommunikationseinrichtung (30) zu bestimmen.

16. System nach einem der Ansprüche 12 bis 15,
**dadurch gekennzeichnet, dass**
die stationäre Kommunikationseinrichtung (20) unterschiedliche Kommunikationschips (24, 25) aufweist, dass
verschiedene Positionsinformationen für die bewegliche Kommunikationseinrichtung (30) in der Speichereinrichtung (21) abgelegt sind, wobei jede Positionsinformation in Abhängigkeit von der Position und gegebenenfalls der Positionsgenauigkeit der stationären Kommunikationseinrichtung (20), einer unterschiedlichen, vorbestimmten Kopplungsstrecke und gegebenenfalls deren Genauigkeit und/oder einer unterschiedlichen, vorbestimmten Annäherungsrichtung und gegebenenfalls deren Genauigkeit ermittelt worden ist, und dass in der Speichereinrichtung (21) zu jeder Positionsinformation eine Zusatzinformation über die jeweilige unterschiedliche, vorbestimmte Kopplungsstrecke und/oder die jeweilige unterschiedliche, vorbestimmte Annäherungsrichtung und gegebenenfalls deren Genauigkeiten abgelegt ist.

17. System nach Anspruch 16,
**dadurch gekennzeichnet, dass**
die stationäre Kommunikationseinrichtung (20) dazu ausgebildet ist, im Wesentlichen zum Zeitpunkt der Kontaktaufnahme mit der beweglichen Kommunikationseinrichtung (30) alle gespeicherten Positionsinformationen und die dazugehörenden Zusatzinformationen zur bewegliche Kommunikationseinrichtung (30) zu übertragen, und dass die bewegliche Kommunikationseinrichtung (30) dazu ausgebildet ist, die Zusatzinformationen auszuwerten und in Abhängigkeit von den ausgewerteten Zusatzinformationen die plausibelste Positionsinformation auszuwählen.

18. System nach Anspruch 16 oder 17,
**dadurch gekennzeichnet, dass**
die stationäre Kommunikationseinrichtung (20) und/oder die bewegliche Kommunikationseinrichtung (30) dazu ausgebildet ist, die aktuelle Bewegungsrichtung der beweglichen Kommunikationseinrichtung (30) an die stationäre Kommunikationseinrichtung (20) zu ermitteln.

19. System nach einem der Ansprüche 12 bis 18,
**dadurch gekennzeichnet, dass**
die bewegliche Kommunikationseinrichtung (30) dazu ausgebildet ist, den Zeitpunkt der Entkopplung von der stationären Kommunikationseinrichtung (20) zu ermitteln und die von der stationären Kommunikationseinrichtung (20) empfangene Positionsinformation erneut als seine aktuelle Position im Wesentlichen zum Entkopplungszeitpunkt zu benutzen.

## Claims

1. A method for providing a position information for a mobile communication device (30) that is approaching a stationary communication device (20), comprising the steps of:
a) storing, in a stationary communication device (20), at least one position information that defines the position and optionally the positional accuracy of a mobile communication device (30) that is approaching the stationary communication device (20), wherein said at least one position information was determined in advance based on the position and optionally the positional accuracy of the stationary communication device (20) and at least one predetermined geometric parameter;
b) establishing first contact between the stationary communication device (20) and the mobile communication device (30) as soon as a predetermined linking distance between the mobile communication device (30) and the stationary communication device (20) is reached; and
c) substantially at the time of establishing first contact, transmitting the at least one stored position information from the stationary communication device (20) to the mobile communication device (30) via a wireless communication link.

2. The method according to claim 1,
**characterized in that**
a predetermined linking distance and optionally the accuracy thereof and/or a predetermined approaching direction and optionally the accuracy thereof each define a geometric parameter.

3. The method as claimed in claim 1 or 2,
**characterized in that**
the establishing of contact between the stationary communication device (20) and the mobile communication device (30) and the transmitting of the at least one position information is performed in accordance with a wireless communication protocol.

4. The method as claimed in claim 3,
**characterized in that**
the wireless communication protocol is a short-range wireless communication protocol, in particular NFC, or a communication protocol for longer distances, in particular according to a Bluetooth standard.

5. The method according to any of claims 2 to 4,
**characterized in that**
different items of position information are provided in the stationary communication device (20) for the mobile communication device (30) according to step a), wherein each item of position information is determined based on the position and optionally the positional accuracy of the stationary communication device (20), a different predetermined linking distance and optionally the accuracy thereof, and/or a different predetermined approaching direction and optionally the accuracy thereof;
and that for each item of position information an additional information uniquely identifying the respective item of position information is stored in the stationary communication device (20).

6. The method according to claim 5,
**characterized in that**
in step c) all items of position information and the associated additional information are transmitted to the mobile communication device (30);
that the additional information is evaluated by the mobile communication device (30) and that based on the evaluated additional information the most plausible item of position information is selected for the position of the mobile communication device (30).

7. The method according to claim 5,
**characterized in that**
the additional information is evaluated by the stationary communication device (20) and that based on the evaluated additional information the most plausible item of position information is transmitted to the mobile communication device (30) in step b).

8. The method according to any of the preceding claims,
**characterized in that**
the time of establishing contact to the mobile communication device is determined in the stationary communication device (20); and that in step c) the determined time is transmitted to the mobile communication device (30).

9. The method according to any of claims 1 to 8,
**characterized in that**
at least one further position information is determined in the mobile communication device (30) by a separate position determination; and that
based on the position information received in step c) and on the at least one further position information, a more plausible position information is calculated.

10. The method according to any of the preceding claims,
**characterized in that**
the items of position information includes position coordinates and the accuracy thereof.

11. The method according to any of the preceding claims,
**characterized in that**
in step a) at least one orientation information defining the orientation of the approaching mobile communication device (30) is provided in the stationary communication device (20); and that
in step c), substantially at the time of establishing contact, the at least one orientation information is transmitted from the stationary communication device (20) to the mobile communication device (30) via a wireless communication link.

12. A system (10) for providing a position information for a mobile communication device (30) which is able to approach a stationary communication device (20), comprising the following features:
- at least one stationary communication device (20) including at least one communication chip (24, 25) for wireless communication and a memory device (21) which stores at least one position information that defines the position and optionally the positional accuracy of a mobile communication device (30), wherein the at least one position information was determined in advance based on the position and optionally the positional accuracy of the stationary communication device (20) and at least one predetermined geometric parameter; and
- at least one mobile communication device (30) including at least one communication chip (34, 35) for wireless communication; wherein the communication chips (24, 34; 25, 35) are adapted for establishing first contact as soon as a predetermined linking distance has been reached between the mobile communication device (30) and the stationary communication device (20); and wherein the stationary communication device (20) is adapted to transmit, substantially at the time of establishing first contact to the mobile communication device (30), the at least one stored position information to the mobile communication device (30).

13. The system according to claim 12,
**characterized in that**
a predetermined linking distance and optionally the accuracy thereof and a predetermined approaching direction and optionally the accuracy thereof each define a geometric parameter.

14. The system according to claim 12 or 13,
**characterized in that**
the communication chips (24, 25, 34, 35) are implemented according to a wireless communication protocol, in particular according to Bluetooth and/or NFC protocols; and/or that the stationary communication device (20) is a passive NFC RFID or a passive FFC RFID.

15. The system according to claim 12 to 14,
**characterized in that**
the stationary communication device (20) is adapted to determine its position, the associated positional accuracy and the at least one position information of the mobile communication device (30).

16. The system according to any of claims 12 to 15,
**characterized in that**
the stationary communication device (20) includes different communication chips (24, 25); that different items of position information for the mobile communication device (30) are stored in the memory device (21), wherein each item of position information was determined based on the position and optionally the positional accuracy of the stationary communication device (20), a different predetermined linking distance and optionally the accuracy thereof, and/or a different predetermined approaching direction and optionally the accuracy thereof;
and that for each item of position information an additional information about the respective different predetermined linking distance and/or the respective different predetermined approaching direction and optionally the accuracies thereof are stored in the memory device (21).

17. The system according to claim 16,
**characterized in that**
the stationary communication device (20) is adapted to transmit, substantially at the time of establishing contact to the mobile communication device (30), all stored items of position information and the associated additional information to the mobile communication device (30); and that
the mobile communication device (30) is adapted to evaluate the additional information and to select the most plausible position information based on the evaluated additional information.

18. The system according to claim 16 or 17,
**characterized in that**
the stationary communication device (20) and/or the mobile communication device (30) are adapted to determine the current movement direction of the mobile communication device (30) to the stationary communication device (20).

19. The system according to any of claims 12 to 18,
**characterized in that**
the mobile communication device (30) is adapted to determine the time of decoupling from the stationary communication device (20) and to reuse the position information received from the stationary communication device (20) as its current position at substantially the time of decoupling.

## Revendications

1. Procédé de mise à disposition d'une information de position pour un dispositif de communication mobile (30), qui se rapproche d'un dispositif de communication fixe (20), comprenant les étapes suivantes :
a) la mise en mémoire, dans un dispositif de communication fixe (20), d'au moins une information de position, qui détermine la position et le cas échéant la précision de position d'un dispositif de communication mobile (30) se rapprochant du dispositif de communication fixe (20), l'au moins une information de position ayant été préalablement déterminée en fonction de la position et le cas échéant de la précision de position du dispositif de communication fixe (20) et d'au moins un paramètre géométrique prédéfini ;
b) la première prise de contact entre le dispositif de communication fixe (20) et le dispositif de communication mobile (30), dès qu'un parcours de couplage prédéfini entre le dispositif de communication mobile (30) et le dispositif de communication fixe (20) a été atteint ; et
c) la transmission, sensiblement au moment de la première prise de contact, de l'au moins une information de position mise en mémoire du dispositif de communication fixe (20) au dispositif de communication mobile (30) au moyen d'une liaison de communication sans fil.

2. Procédé selon la revendication 1, **caractérisé en ce que** :
un parcours de couplage prédéfini et le cas échéant la précision de celui-ci et/ou une direction de rapprochement prédéfinie et le cas échéant la précision de celle-ci forment chacun un paramètre géométrique.

3. Procédé selon la revendication 1 ou 2, **caractérisé en ce que** :
la prise de contact entre le dispositif de communication fixe (20) et le dispositif de communication mobile (30) ainsi que la transmission de l'au moins une information de position sont mises en oeuvre conformément à un protocole de communication radio.

4. Procédé selon la revendication 3, **caractérisé en ce que** :
le protocole de communication radio est un protocole de communication radio de faible portée, en particulier NFC, ou un protocole de communication pour de plus longues portées, en particulier conformément à une norme Bluetooth.

5. Procédé selon l'une quelconque des revendications 2 à 4, **caractérisé en ce que** :
conformément à l'étape a) différentes informations de position pour le dispositif de communication mobile (30) sont mises à disposition dans le dispositif de communication fixe (20), dans lequel chaque information de position est déterminée en fonction de la position et le cas échéant de la précision de position du dispositif de communication fixe (20), d'un trajet de couplage prédéfini différent et le cas échéant de la précision de celui-ci et/ou d'une direction de rapprochement prédéfinie différente et le cas échéant de la précision de celle-ci, et **en ce que**, pour chaque information de position, une information supplémentaire, qui identifie de manière univoque l'information de position respective, est mise en mémoire dans le dispositif de communication fixe (20).

6. Procédé selon la revendication 5, **caractérisé en ce que** :
à l'étape c), toutes les informations de position et les informations supplémentaires associées sont transmises au dispositif de communication mobile (30), **en ce que** les informations supplémentaires sont évaluées par le dispositif de communication mobile (30) et l'information de position la plus plausible pour la position du dispositif de communication mobile (30) est sélectionnée en fonction des informations supplémentaires évaluées.

7. Procédé selon la revendication 5, **caractérisé en ce que** :
les informations supplémentaires sont évaluées par le dispositif de communication fixe (20) et, à l'étape b), l'information de position la plus plausible est transmise au dispositif de communication mobile (30) en fonction des informations supplémentaires évaluées.

8. Procédé selon l'une quelconque des revendications précédentes, **caractérisé en ce que** :
le moment de la prise de contact avec le dispositif de communication mobile est déterminé dans le dispositif de communication fixe (20) et **en ce que**, à l'étape c), le moment déterminé est transmis au dispositif de communication mobile (30).

9. Procédé selon l'une quelconque des revendications 1 à 8, **caractérisé en ce que** :
dans le dispositif de communication mobile (30) au moins une autre information de position est déterminée au moyen d'une détermination de position séparée, et **en ce que**
une information de position plus plausible est calculée en fonction de l'information de position reçue à l'étape c) et de l'au moins une autre information de position.

10. Procédé selon l'une quelconque des revendications précédentes, **caractérisé en ce que** :
les informations de position contiennent des coordonnées de position et la précision de celles-ci.

11. Procédé selon l'une quelconque des revendications précédentes, **caractérisé en ce que** :
à l'étape a), au moins une information d'orientation, qui détermine l'orientation du dispositif de communication mobile (30) se rapprochant, est mise à disposition dans le dispositif de communication fixe (20), et **en ce que** à l'étape c) sensiblement au moment de la prise de contact, l'au moins une information d'orientation est transmise du dispositif de communication fixe (20) au dispositif de communication mobile (30) au moyen d'une liaison de communication sans fil.

12. Système (10) de mise à disposition d'une information de position pour un dispositif de communication mobile (30) qui peut se rapprocher d'un dispositif de communication fixe (20), comprenant les caractéristiques suivantes :
- au moins un dispositif de communication fixe (20) comportant au moins une puce de communication (24, 25) pour la communication sans fil et un dispositif mémoire (21), dans lequel au moins une information de position est mise en mémoire, qui détermine la position et le cas échéant la précision de position d'un dispositif de communication mobile (30), dans lequel l'au moins une information de position a été préalablement déterminée en fonction de la position et le cas échéant de la précision de position du dispositif de communication fixe (20) et d'au moins un paramètre géométrique prédéfini, et
- au moins un dispositif de communication mobile (30) comportant au moins une puce de communication (34, 35) pour la communication sans fil,
les puces de communication (24, 34 ; 25, 35) étant conçues pour la première prise de contact dès qu'un parcours de couplage prédéfini entre le dispositif de communication mobile (30) et le dispositif de communication fixe (20) a été atteint, et le dispositif de communication fixe (20) étant conçu pour transmettre l'au moins une information de position mise en mémoire au dispositif de communication mobile (30) sensiblement au moment de la première prise de contact avec le dispositif de communication mobile (30).

13. Système selon la revendication 12, **caractérisé en ce que** :
un parcours de couplage prédéfini et le cas échéant la précision de celui-ci et/ou une direction de rapprochement prédéfinie et le cas échéant la précision de celle-ci forment chacun un paramètre géométrique.

14. Système selon la revendication 12 ou 13, **caractérisé en ce que** :
les puces de communication (24, 25, 34, 35) sont implémentées conformément à un protocole de communication radio, en particulier conformément au protocole BlueTooth et/ou NFC, et/ou le dispositif de communication fixe (20) est une RFID-NFC passive ou une RFID-FFC passive.

15. Système selon la revendication 12 à 14, **caractérisé en ce que** :
le dispositif de communication fixe (20) est conçu pour déterminer sa position, la précision de position associée et l'au moins une information de position du dispositif de communication mobile (30).

16. Système selon l'une quelconque des revendications 12 à 15, **caractérisé en ce que** le dispositif de communication fixe (20) comprend différentes puces de communication (24, 25), **en ce que** différentes informations de position pour le dispositif de communication mobile (30) sont mises en mémoire dans le dispositif mémoire (21), dans lequel chaque information de position ont été déterminée en fonction de la position et le cas échéant de la précision de position du dispositif de communication fixe (20), d'un trajet de couplage prédéfini différent et le cas échéant de la précision de celui-ci et/ou d'une direction de rapprochement prédéfinie différente et le cas échéant de la précision de celle-ci, et **en ce que**, pour chaque information de position, une information supplémentaire concernant le parcours de couplage prédéfini différent respectif et/ou la direction de rapprochement prédéfinie différente respective et le cas échéant les précisions de ceux-ci est mise en mémoire dans le dispositif mémoire (21).

17. Système selon la revendication 16, **caractérisé en ce que** :
le dispositif de communication fixe (20) est conçu pour transmettre toutes les informations de position mises en mémoire et les informations supplémentaires associées au dispositif de communication mobile (30) sensiblement au moment de la prise de contact avec le dispositif de communication mobile (30), et **en ce que** le dispositif de communication mobile (30) est conçu pour évaluer les informations supplémentaires et sélectionner l'information de position la plus plausible en fonction des informations supplémentaires évaluées.

18. Système selon la revendication 16 ou 17, **caractérisé en ce que** :
le dispositif de communication fixe (20) et/ou le dispositif de communication mobile (30) sont conçus pour déterminer la direction de déplacement actuelle du dispositif de communication mobile (30) sur le dispositif de communication fixe (20).

19. Système selon l'une quelconque des revendications 12 à 18, **caractérisé en ce que** :
le dispositif de communication mobile (30) est conçu pour déterminer le moment du découplage du dispositif de communication fixe (20) et pour utiliser l'information de position reçue du dispositif de communication fixe (20) à nouveau comme sa position actuelle sensiblement au moment du découplage.
